# FASCICULE DE BREVET EUROPEEN

(11) **EP 2 282 866 B1**
(45) Date de publication et mention de la délivrance du brevet: **18.01.2012**
(21) Numéro de dépôt: 09745949.9
(22) Date de dépôt: 16.04.2009
(51) Int. Cl.: B23K 7/00, B23K 7/10

(54) **PROCEDE D'OXYCOUPAGE D'UNE PIECE EN ACIER AVEC AUGMENTATION DE LA PRESSION ET/OU DU DEBIT DE L'OXYGENE GAZEUX APRES AMORCAGE DU PERCAGE**
VERFAHREN ZUR BRENNSCHNEIDUNG EINES STAHLTEILS MIT DRUCK- ODER FLUSSRATENANSTIEG DES GASFÖRMIGEN SAUERSTOFFS NACH BEGINN DER DURCHSTECHUNG
METHOD OF FLAME CUTTING A STEEL PART, WITH AN INCREASE IN THE PRESSURE AND/OR FLOW RATE OF THE GASEOUS OXYGEN AFTER INITIATION OF PIERCING

(30) Priorité: 24.04.2008 FR 0852747
(43) Date de publication de la demande: 16.02.2011
(73) Titulaire: L'Air Liquide Société Anonyme pour l'Etude et l'Exploitation des Procédés Georges Claude, 75007 Paris (FR)
(72) Inventeur: SAEZ, Michel, F-60260 Lamorlaye (FR); BULLY, Sébastien, F-78600 Maisons Laffitte (FR)
(74) Mandataire: Pittis, Olivier
(86) Numéro de dépôt international: PCT/FR2009/050706
(87) Numéro de publication internationale: WO 2009/138630

(56) Documents cités:
- GB-A- 853 088
- JP-A- 10 080 764
- JP-A- 56 033 169
- JP-A- 59 070 464
- JP-A- 60 145 273
- JP-A- 63 002 562
- US-A- 3 918 480

## Description

La présente invention concerne un procédé d'oxycoupage d'une pièce conformément au préambule de la revendication 1 (voir, par example, JP 59/070464), permettant d'éviter ou minimiser les projections de métal en fusion entre le préchauffage et le perçage de la tôle, lequel procédé est particulièrement adapté aux installations non pourvues d'un dispositif d'arrivée progressif de la pression d'oxygène de coupe.

L'oxycoupage est un procédé de découpe largement utilisé pour la découpe des aciers ou plus généralement des matériaux ferreux, c'est-à-dire renfermant du fer.

Au plan industriel, ce procédé est mis en oeuvre sur des installations ou des machines comprenant 1 ou 2 chalumeaux sur les installations les plus simples, et jusqu'à 6 à 12 chalumeaux fonctionnant en parallèle, pour les plus complexes, typiquement une machine d'oxycoupage comprend de 1 à 8 chalumeaux.

En fait, l'oxycoupage est un procédé de découpe par combustion localisée et continue du métal par un jet d'oxygène pur. Ce procédé est bien connu dans l'industrie. Le procédé est d'abord initié avec une flamme oxycombustible à haute température, pendant la phase dite d'amorçage ou de préchauffage, permettant de porter localement la pièce à couper à sa température d'inflammation, c'est-à-dire typiquement de l'ordre de 1150°C, puis la réaction de combustion est débutée puis entretenue par envoi d'un jet d'oxygène, durant la phase de perçage puis de coupe proprement dite et ce, tout au long de la trajectoire de coupe désirée.

Les matériaux pouvant être oxycoupés sont principalement ceux contenant du fer, en particulier les aciers faiblement alliés ou non alliés, notamment les aciers au carbone.

Les principaux paramètres influençant les performances de coupes sont le matériel de coupe, en particulier le choix de la buse de coupage, la qualité des gaz (combustible et oxygène), le matériau à découper et le savoir-faire de l'opérateur.

L'oxycoupage est principalement utilisé pour la découpe de pièces d'acier d'épaisseur supérieure à 10 mm car sur des épaisseurs inférieures, les limites du procédé sont atteintes, à savoir une qualité et des performances de coupe non acceptables au plan industriel.

Pour les épaisseurs supérieures à 30 mm, lors du perçage en pleine tôle de la pièce à couper, juste après le préchauffage de celle-ci, on a remarqué qu'il existait également certains problèmes récurrents, tels que des remontées de métal en fusion sur la buse, des retours de flammes intempestifs provoquant des dégradations du matériel de coupe, des défauts de coupes dues à des buses encrassées, des défauts de perpendicularité des faces de coupe et des difficultés à démarrer la coupe.

En fait, la plupart de ces problèmes sont engendrés ou résultent des projections adhérentes de métal en fusion qui se produisent juste après le préchauffage de la tôle, c'est-à-dire pendant le perçage de la tôle.

Ce phénomène s'accentue lorsqu'on utilise une buse à haute pression, typiquement plus de 8 bar, et ayant un débit d'oxygène élevé, c'est-à-dire d'au moins 3900 1/h, du fait de la réaction immédiate qui se produit avec l'oxygène amené en grande quantité.

Ce phénomène est par ailleurs encore amplifié lorsque plusieurs chalumeaux d'oxycoupage fonctionnent en parallèle, ainsi que lors de l'utilisation de buses dite à Haute Pression qui ont des débits instantanés d'oxygène de coupe de 7 à 12 bar.

Le but de l'invention est dès lors de proposer un procédé d'oxycoupage amélioré permettant d'éviter ou de minimiser tout ou partie des problèmes susmentionnés de manière à minimiser ou à éviter les projections de métal en fusion, lors du perçage de la tôle, en début de coupage.

La solution de l'invention est un procédé d'oxycoupage d'une pièce en un métal contenant du fer conformément à la revendication 1.

Selon le cas, le procédé de l'invention peut comprendre l'une ou plusieurs des caractéristiques suivantes :
- le gaz combustible de l'étape a) et l'oxygène des étapes a), b) et c) sont distribués par la buse qui est située en regard de la surface supérieure de la pièce.
- à l'étape a), le préchauffage est effectué jusqu'à atteindre au moins la température d'inflammation du métal de la pièce, au niveau de ladite zone localisé de la pièce, de préférence une température supérieure ou égale à 1150°C.
- à l'étape b), on opère en outre un éloignement de la buse de la surface supérieure de la pièce de manière à positionner ladite buse à une distance de perçage (d) comprise entre 1 et 5 cm, typiquement de l'ordre de 2 cm à 3 cm, de la surface supérieure de la pièce.
- après éloignement de la buse de la surface supérieure de la pièce mais préalablement à l'obtention du perçage selon toute l'épaisseur de la pièce, on opère un déplacement relatif de la buse par rapport à la pièce de manière au moins initier une saignée de coupe.
- la première pression d'oxygène est inférieure à 2 bar environ et la deuxième pression d'oxygène est supérieure à 2 bar, de préférence supérieure à 5 bar.
- l'épaisseur de la pièce est supérieure à 25 mm, de préférence comprise entre 30 et 100 mm.
- la pièce est en acier.
- le gaz combustible utilisé à l'étape a) contient de l'acétylène, de l'éthylène, du gaz naturel ou du GPL (gaz de pétrole liquéfié).
- il met en oeuvre plusieurs buses de coupe agencées sur plusieurs chalumeaux fonctionnant simultanément pour réaliser concomitamment plusieurs découpages au sein de ladite pièce.

L'invention va maintenant être mieux comprise grâce à la description détaillée suivante du principe de perçage et du mode opératoire, faite en références aux Figures annexées.

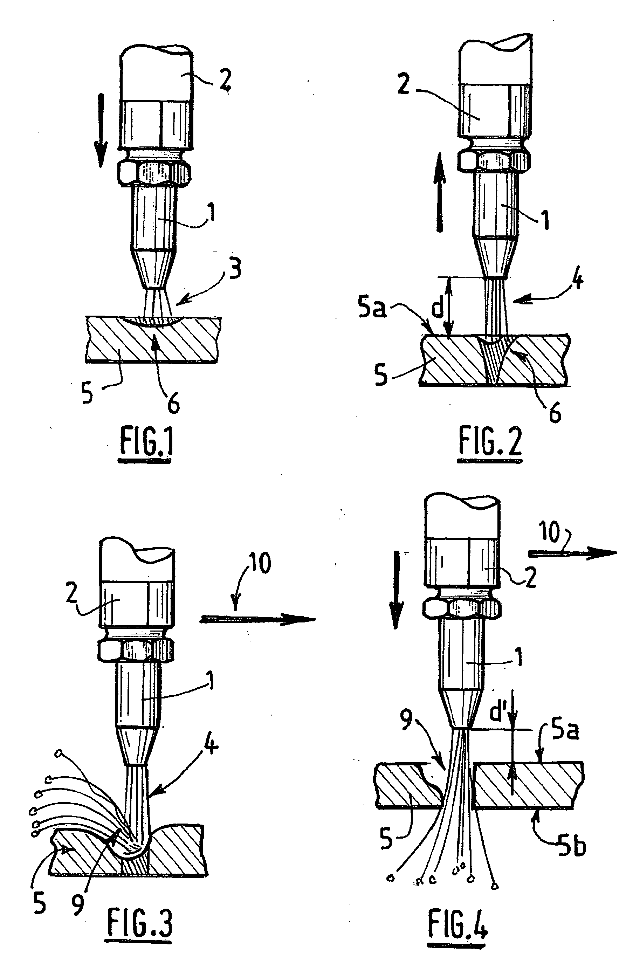

Les figures 1 à 4 illustrent le principe d'un procédé d'oxycoupage d'une tôle en acier de 30 mm d'épaisseur selon l'invention.

Le procédé d'oxycoupage de l'invention débute avec une étape de préchauffage classique et localisé (en 6) de la tôle 5 à couper, comme illustré en Figure 1, par envoi vers la (ou les) buse 1 d'un chalumeau d'oxycoupage 2, d'un mélange gazeux formé d'oxygène et d'un gaz combustible pour établir une flamme 3 de chauffe dont l'objectif est de préchauffer la tôle 5 à couper pour qu'elle atteigne localement (en 6) sa température d'inflammation d'environ 1150°C, de manière à maintenir une homogénéité du jet d'oxygène de coupe distribué subséquemment.

En effet, pour réaliser une opération d'oxycoupage, il est nécessaire de mettre en oeuvre successivement au moins une flamme dite « de chauffe » et un jet d'oxygène central dit « oxygène de coupe ».

La flamme de chauffe doit être capable de porter, très rapidement et localement, la surface de la tôle à la température d'inflammation du matériau, à savoir classiquement de l'ordre d'environ 1150° C pour de l'acier.

Lorsque celle-ci est atteinte, l'oxygène de coupe est libéré et la réaction de combustion du fer contenu dans l'acier débute. Il est donc primordial de bien définir le gaz combustible le plus adapté pour atteindre rapidement la température d'inflammation.

En fait, plusieurs mélanges de gaz combustibles et d'oxygène permettent d'obtenir une température supérieure à 1500° C. Ceux-ci sont donnés dans le Tableau suivant.

**Tableau**

| Mélange gazeux | Température atteinte (en °C) |
|---|---|
| O₂ + acétylène | 3150 |
| O₂ + éthylène | 2924 |
| O₂ + hydrogène | 2856 |
| O₂ + propane | 2830 |

La flamme de chauffe se compose d'un dard et d'un panache. En oxycoupage, seules les propriétés du dard de la flamme sont intéressantes. Le dard est la surface sur laquelle se produit la combustion du mélange du gaz comburant et du gaz combustible introduit dans le chalumeau. Cette combustion permet d'obtenir des températures très élevées. La quantité d'énergie qu'il est possible de transmettre à la tôle est fonction de la puissance de ce dard. Aussi, il faut que cette puissance soit concentrée sur une petite surface afin d'obtenir un fort échauffement de l'endroit ou débute l'opération de découpe. Cette quantité d'énergie est définie par la puissance spécifique (puissance par unité de surface donnée en KJ/cm².s)

L'acétylène est le gaz ayant la plus forte puissance spécifique : 8 KJ/cm².s pour un mélange ayant un rapport de volume 1/1. Cette puissance peut atteindre 16 KJ/cm².s avec un rapport de 1m³ de gaz combustible pour 2 m³ d'oxygène.

C'est également l'acétylène qui détient la plus grande vitesse de déflagration dans l'oxygène. Cette notion est importante car elle informe de la sensibilité aux retours de flamme et reste un des facteurs bloquant à l'utilisation en oxycoupage sur machine.

Une fois la température d'inflammation atteinte, par exemple après un temps de chauffage donné préfixé, on opère un envoi d'un jet 4 d'oxygène de coupe vers la zone préchauffée 6, comme montré en Figure 2, tout en procédant préférentiellement à une légère remontée, c'est-à-dire un éloignement de la buse 1 de coupe de la surface supérieure 5a de la pièce 5 à couper, de préférence un éloignement d'une distance « d » de l'ordre de 2 cm à 3 cm environ.

Afin d'éviter les projections de métal en fusion, il conviendra de contrôler la pression (et/ou le débit) du jet d'oxygène 4 de coupe, par exemple limiter la pression à une valeur maximale de l'ordre de 0,2 à 1 bar, puis de commencer à déplacer lentement le chalumeau 2 relativement par rapport à la pièce 5 à couper selon la trajectoire de coupe désirée, c'est-à-dire dans le sens de la flèche 10 de la Figure 3, de manière à obtenir une évacuation du métal fondu vers la partie arrière 9 de la saignée de coupe en cours de formation.

Selon l'invention, le déplacement du chalumeau 2 commence alors que la tôle 5 n'est pas encore percée selon la totalité de son épaisseur.

Après avoir décalé le chalumeau, on augmente progressivement la pression et/ou le débit du jet 4 d'oxygène de coupe envoyé vers la saignée 9 en cours de formation, tout en rapprochant à nouveau le chalumeau 2 de la surface supérieure 5a de la tôle 5 et en continuant le déplacement (selon la direction 10) du chalumeau 2 le long de la trajectoire de coupe souhaitée.

En d'autres termes, selon l'invention, on commence à percer et à couper la tôle 5, postérieurement au préchauffage localisé 6 de la tôle 5, en utilisant une pression et/ou un débit d'oxygène du jet d'oxygène 4 qui est/sont inférieurs à ceux mis en oeuvre pendant le coupage proprement dit.

Ensuite, l'oxycoupage se fait normalement, c'est-à-dire selon un processus de combustion exothermique qui consiste à brûler le fer de l'acier constituant la tôle 5 par de l'oxygène sous pression avec une formation d'oxydes de fer. Les oxydes de fer forment un laitier en fusion évacué de la saignée 9 d'oxycoupage sous l'effet de la pression du jet d'oxygène 4 de coupe, c'est-à-dire expulsé en dessous de la tôle 5.

Pendant la phase de préchauffage (Fig. 1), l'initiation de la réaction de combustion se fait avec un mélange gazeux comprenant de l'oxygène en tant que comburant et un gaz combustible, tel que l'acétylène, qui est « allumé » de manière à obtenir une flamme de combustion servant à porter le métal à sa température d'inflammation et à déclencher ensuite la combustion proprement dite du fer (Fig. 2 à 4) du fer qu'il contient. L'entretien de la réaction de combustion du métal se fait par envoi uniquement de l'oxygène sous pression, durant toute la coupe de la pièce.

L'oxycoupage selon l'invention peut être réalisé manuellement ou sur une machine, en particulier sur une machine équipée de plusieurs chalumeaux 2 fonctionnant en parallèle pour réaliser la découpe de pièces identiques (grandes séries) au sein d'une tôle d'acier ou analogue.

Le procédé selon l'invention particulièrement adapté au coupage d'une tôle ayant une épaisseur comprise entre 25 à 30 mm et 140 mm, typiquement de l'ordre de 30 à 100 mm environ.

Le procédé de l'invention peut être mis en oeuvre avec une buse d'oxycoupage simple ou alors avec une buse à double flux d'oxygène. Ces deux types de buses sont parfaitement usuels.

Ainsi, une buse simple se compose typiquement d'un corps allongé comprenant un passage central axial d'oxygène apte à délivrer un jet central d'oxygène, et un ou plusieurs passages périphériques de gaz apte à délivrer, pendant la phase de préchauffage, qui est parfois appelée phase d'amorçage, un ou plusieurs jets périphériques de gaz combustible venant se mélanger avec l'oxygène et étant brûler en donnant la flamme de combustion, dite flamme de chauffe, servant durant le préchauffage localisé de la tôle.

Un buse à double flux d'oxygène est similaire à une buse simple mais comprend en outre un ou plusieurs passages internes supplémentaires de gaz, en communication fluidique avec le passage central d'oxygène, qui sont aptes à dévier une partie du flux central d'oxygène et de le distribuer autour du jet central d'oxygène de coupe de manière à créer un rideau ou gainage d'oxygène autour du jet central d'oxygène, pendant la coupe.

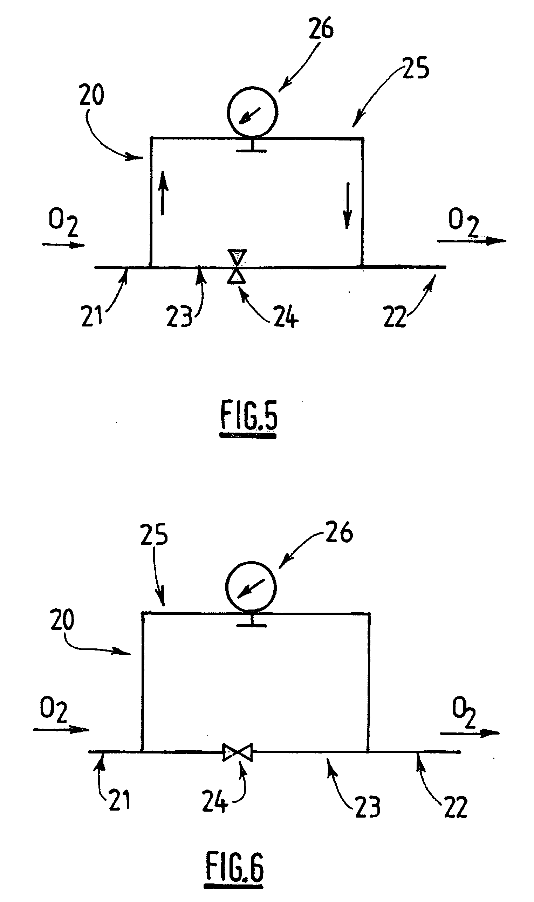

La mise en oeuvre de l'invention peut se faire au moyen d'un circuit de gaz 20, tel celui illustré sur les Figures 5 et 6, qui est relié à chacun des chalumeaux 2 munis d'une buse 1.

La Figure 5 représente le circuit 20 en position 'fermée', c'est-à-dire dans la configuration qui doit être adoptée lors du préchauffage et du début de coupe jusqu'au perçage proprement dit de la pièce 5, comme illustré sur les Figures 1 à 3, alors que la Figure 6 représente le circuit 20 en position 'ouverte', c'est-à-dire dans la configuration qui doit être adoptée après perçage et lors du coupage, comme illustré sur la Figure 4.

Comme on le voit, le circuit 20 de gaz comprend une canalisation principale 23 de gaz avec une entrée 21 pour l'oxygène (O₂) sous pression, par exemple à 10 bar, et une sortie d'oxygène 22 reliée fluidiquement au(x) chalumeau(x).

La canalisation principale 23 comprend en outre une vanne, par exemple de type ¼ de tour, permettant de contrôler le passage de gaz dans la canalisation 23 principale, en particulier durant la coupe (cf. Fig. 4).

Par ailleurs, le circuit 20 comporte une ligne de dérivation 25 ou bipasse permettant de bipasser la vanne 24, sur laquelle est agencé un détendeur 26 de gaz permettant de contrôler la pression (ou le débit) du gaz circulant dans cette ligne de dérivation 25, par exemple un détendeur 26 ayant une plage de travail allant de 0 à 2 bar.

Lorsque le circuit 20 est en position « fermée », comme illustré en Figure 5, alors l'oxygène sous haute pression (10 bar) arrivant par l'entrée 21, transite par la ligne de dérivation 25 mais pas par la ligne principale 23 puisque que la vanne 24 est fermée. Le gaz subit alors une détente dans le détendeur 26 jusqu'à la pression basse souhaitée, par exemple 0,5 bar, mise en oeuvre durant les étapes illustrées sur les figures 1 à 3, puis est convoyé vers la sortie 22, en direction du chalumeau.

Lorsque le perçage est obtenu, la vanne 24 passe en position « ouverte » et le circuit 20 se retrouve dans la configuration de la Figure 6 pour opérer le coupage proprement dit, tel qu'illustré sur la Figure 4. Le gaz transite alors essentiellement par la ligne principale 23 au travers de la vanne 24 sans y subir de détente. Il est donc envoyer sous haute pression (10 bar) vers le chalumeau.

La vanne 24 peut être une électrovanne commandée automatiquement, voire à distance, par une console numérique de type CNC ou toute armoire de commande ou ordinateur adapté.

De même, le niveau de pression du détendeur 26 peut également être piloté automatiquement par une CNC ou analogue.

En fait, c'est essentiellement le pilotage de la vanne 24 qui permettra de varier la pression d'oxygène donc de passer d'une étape à l'autre du procédé de l'invention.

Il va de soi que le pilotage de la vanne 24 se fait de manière synchronisée ou coordonnée avec le pilotage des mouvements en éloignement ou en rapprochement de la buse portée par le chalumeau de la surface supérieure de la plaque à couper, ainsi qu'avec celui du mouvement de déplacement relatif du chalumeau par rapport à ladite plaque à couper, comme expliqué ci-avant.

Le circuit 20 et ses différents composants peuvent être fixés au moyen d'une plaque de support et de fixation ou tout autre système analogue sur la machine d'oxycoupage.

Lorsque plusieurs chalumeaux sont utilisés en parallèle, chaque chalumeau peut être alimenté par un circuit 20 de conduits d'amenée gaz qui lui est propre et dédié à ce chalumeau, ou alors un même circuit 20 peut alimenter en gaz plusieurs chalumeaux.

## Revendications

1. Procédé d'oxycoupage d'une pièce (5, 5a, 5b) en un métal contenant du fer, mettant en oeuvre au moins un chalumeau (2) muni d'une buse de coupe (1), dans lequel on opère selon les étapes de :
a) préchauffage d'une zone localisé (6) de la pièce (5, 5a, 5b) au moyen d'une flamme (3) obtenue par combustion d'un gaz combustible et d'oxygène, et
b) envoi en direction de la zone localisé (6) préchauffée à l'étape a), d'oxygène gazeux à une première pression et/ou à un premier débit pour initier une amorce de perçage tout en décalant le chalumeau (2) dans le sens (10) de la coupe,
**caractérisé en ce qu'**il comporte en outre l'étape c) suivante :
c) après l'amorce de perçage de la pièce à l'étape b), augmenter la pression et/ou le débit de l'oxygène gazeux envoyé en direction de la zone de début de perçage jusqu'à une deuxième pression supérieure à la première pression et/ou à un deuxième débit supérieur au premier débit pour obtenir le perçage total de la pièce (5, 5a, 5b), et on opère un rapprochement de la buse (1) de la surface supérieure (5a) de la pièce (5) jusqu'à une distance de coupe (d') comprise entre 0,5 et 1,5 cm, avec d' < d, concomitamment à l'augmentation de la pression et/ou du débit d'oxygène gazeux envoyé en direction de la zoné percée.

2. Procédé selon la revendication 1, **caractérisé en ce que** le gaz combustible de l'étape a) et l'oxygène des étapes a), b) et c) sont distribués par la buse (1) qui est située en regard de la surface supérieure (5a) de la pièce (5).

3. Procédé selon l'une des revendications précédentes, **caractérisé en ce qu'**à l'étape a), le préchauffage est effectué jusqu'à atteindre au moins la température d'inflammation du métal de la pièce, au niveau de ladite zone localisé (6) de la pièce (5, 5a, 5b), de préférence une température supérieure ou égale à 1150°C.

4. Procédé selon l'une des revendications précédentes, **caractérisé en ce qu'**à l'étape b), on opère en outre un éloignement de la buse (1) de la surface supérieure (5a) de la pièce de manière à positionner ladite buse à une distance de perçage (d) comprise entre 1 et 5 cm, typiquement de l'ordre de 2 cm à 3 cm, de 1a surface supérieure (5a) de la pièce (5).

5. procédé selon l'une des revendications précédentes, **caractérisé en ce qu'**après éloignement de la buse (1) de la surface supérieure (5a) de la pièce mais préalablement à l'obtention du perçage selon toute l'épaisseur de la pièce (5), on opère un déplacement relatif de la buse (1) par rapport à la pièce (5) de manière au moins initier une saignée de coupe (9).

6. Procédé selon l'une des revendications précédentes, caractérisé que la première pression d'oxygène est inférieure à 2 bar environ et la deuxième pression d'oxygène est supérieure à 2 bar, de préférence supérieure à 5 bar.

7. Procédé selon l'une des revendications précédentes, **caractérisé en ce qu'**il met en oeuvre plusieurs buses (1) de coupe agencées sur plusieurs chalumeaux (2) fonctionnant simultanément pour réaliser concomitamment plusieurs découpages au sein de ladite pièce (5, 5a, 5b).

## Claims

1. Process, employing at least one torch (2) equipped with a cutting nozzle (1), for oxy-fuel cutting an iron-containing metal workpiece (5, 5a, 5b), which proceeds according to the steps of:
a) preheating a localized region (6) of the workpiece (5, 5a, 5b) by means of a flame (3) obtained by combustion of a combustible gas and oxygen; and
b) supplying, in the direction of the localized region (6) preheated in step a), gaseous oxygen at a first pressure and/or a first flow rate in order to initiate piercing, whilst at the same time moving the torch (2) in the cutting direction (10),
**characterized in that** it furthermore comprises the following step c) :
c) after the piercing of the workpiece has been initiated in step b), the pressure and/or the flow rate of the gaseous oxygen supplied in the direction of the region where the piercing started is increased up to a second pressure and/or a second flow rate that one higher than the first pressure and/or first flow rate in order to perforate the workpiece (5, 5a, 5b), and the nozzle (1) is moved toward the upper surface (5a) of the workpiece (5) to a cutting distance (d') of between 0.5 cm and 1.5 cm, with d' < d, and concomitantly the pressure and/or flow rate of the gaseous oxygen, supplied in the direction of the pierced region, is increased.

2. Process according to to Claim 1, **characterized in that** the combustible gas of step a) and the oxygen of steps a), b) and c) are supplied through the nozzle (1) which is located facing the upper surface (5a) of the workpiece (5).

3. Process according to either of the previous claims, **characterized in that** in step a) the workpiece is preheated until at least the ignition temperature of the metal of the workpiece is reached in said localized region (6) of the workpiece (5, 5a, 5b), preferably a temperature greater than or equal to 1150°C.

4. Process according to one of the preceding claims, **characterized in that** in step b) the nozzle (1) is furthermore moved away from the upper surface of the workpiece in order to position said nozzle at a piercing distance (d) of between 1 cm and 5 cm, typically about 2 cm to 3 cm, from the upper surface (5a) of the workpiece (5).

5. The process according to one of the preceding claims, **characterized in that** after the nozzle (1) has been moved away from the upper surface (5a) of the workpiece, but before the perforation of the workpiece (5), the nozzle (1) is moved relative to the workpiece (5) so as at least to initiate a kerf (9).

6. Process according to one of the preceding claims, **characterized in that** the first oxygen pressure is lower than about 2 bar and the second oxygen pressure is higher than 2 bar, preferably higher than 5 bar.

7. Process according to one the preceding claims, **characterized in that** it employs several cutting nozzles (1) arranged on several torches (2) that operate simultaneously in order to produce concomitantly several cuts within said workpiece (5, 5a, 5b).

## Patentansprüche

1. Verfahren zum Brennschneiden eines Teils (5, 5a, 5b) aus einem eisenhaltigen Metall, bei welchem mindestens ein Brenner (2) eingesetzt wird, der mit einer Schneiddüse (1) versehen ist, wobei gemäß den folgenden Schritten vorgegangen wird:
a) Vorheizen eines örtlich begrenzten Bereichs (6) des Teils (5, 5a, 5b) mittels einer Flamme (3), die durch Verbrennung eines brennbaren Gases und von Sauerstoff erhalten wird, und
b) Zuführen von gasförmigem Sauerstoff mit einem ersten Druck und/oder einer ersten Flussrate in Richtung des örtlich begrenzten Bereichs (6), der in Schritt a) vorgeheizt wurde, um eine Ansatzstelle zum Durchstoßen zu bilden, wobei der Brenner (2) in Richtung (10) des Schneidevorgangs verschoben wird.
**dadurch gekennzeichnet, dass** es darüber hinaus den folgenden Schritt c) aufweist:
c) nach Bildung der Ansatzstelle zum Durchstoßen des Teils in Schritt b), Erhöhen des Drucks und/oder der Flussrate des gasförmigen Sauerstoffs, der in Richtung des Anfangsbereichs des Durchstoßen zugeführt wird, bis auf einen zweiten Druck, der höher als der erste Druck ist, und/oder eine zweite Flussrate, die höher als die erste Flussrate ist, um das Teil (5, 5a, 5b) vollständig zu durchstoßen,
und wobei die Düse (1) der oberen Oberfläche (5a) des Teils (5) angenähert wird, bis eine Schneidentfernung (d') erreicht ist, die im Bereich von 0,5 bis 1,5 cm liegt, wobei d' < d, gleichzeitig mit der Erhöhung des Drucks und/oder der Flussrate des gasförmigen Sauerstoff, der in Richtung des durchstoßenen Bereichs zugeführt wird.

2. Verfahren nach Anspruch 1, **dadurch gekennzeichnet, dass** das brennbare Gas des Schrittes a) und der Sauerstoff der Schritte a), b) und c) durch die Düse (1) abgegeben werden, welche sich gegenüber der oberen Oberfläche (5a) des Teils (5) befindet.

3. Verfahren nach einem der vorhergehenden Ansprüche, **dadurch gekennzeichnet, dass** in Schritt a) das Vorheizen solange durchgeführt wird, bis im örtlich begrenzten Bereich (6) des Teils (5, 5a, 5b) mindestens der Brennpunkt des Metalls des Teils erreicht ist, wobei vorzugsweise eine Temperatur von mindestens 1150 °C erreicht wird.

4. Verfahren nach einem der vorhergehenden Ansprüche, **dadurch gekennzeichnet, dass** in Schritt b) darüber hinaus die Düse (1) von der oberen Oberfläche (5a) des Teils derart entfernt wird, dass die Düse in einer Durchstoßentfernung (d) angeordnet ist, die im Bereich von 1 bis 5 cm, typischerweise in der Größenordnung von 2 bis 3 cm, von der oberen Oberfläche (5a) des Teils (5) liegt.

5. Verfahren nach einem der vorhergehenden Ansprüche, **dadurch gekennzeichnet, dass** nach dem Entfernen der Düse (1) von der oberen Oberfläche (5a) des Teils, aber vor dem Erzielen eines Durchstoßes durch die gesamte Dicke des Teils (5), die Düse (1) in einer Relativbewegung zum Teil (5) derart verschoben wird, dass eine Schneidkerbe (9) mindestens ansatzweise gebildet wird.

6. Verfahren nach einem der vorhergehenden Ansprüche, **dadurch gekennzeichnet, dass** der erste Sauerstoffdruck geringer als ungefähr 2 Bar ist und der zweite Sauerstoffdruck höher als 2 Bar, vorzugsweise höher als 5 bar, ist.

7. Verfahren nach einem der vorhergehenden Ansprüche, **dadurch gekennzeichnet, dass** dabei mehrere Schneiddüsen (1) eingesetzt werden, die an mehreren Brennern (2) angeordnet sind, die gleichzeitig betrieben werden, um innerhalb des Teils (5, 5a, 5b) mehrere Einschnitte auf einmal vorzunehmen.
